# EUROPÄISCHE PATENTANMELDUNG

(11) **EP 4 779 134 A1**
(43) Veröffentlichungstag der Anmeldung: **22.07.2026**
(21) Anmeldenummer: 26152277.5
(22) Anmeldetag: 16.01.2026
(51) Int. Cl.: F01P 11/02, B60H 1/02

(54) **FLÜSSIGKEITSKREISLAUF MIT BLASENABSCHEIDER FÜR EIN FAHRZEUG SOWIE FAHRZEUG DAMIT**

(30) Priorität: 21.01.2025 DE 102025102102
(71) Anmelder: Konvekta Aktiengesellschaft, 34613 Schwalmstadt-Ziegenhain (DE)
(72) Erfinder: Lomp, Dirk, 34630 Gilserberg (DE); Best, Pascal, 34633 Ottrau (DE)
(74) Vertreter: Lindinger, Bernhard

(57) **Zusammenfassung**

Die Erfindung betrifft Flüssigkeitskreislauf (1) für ein Fahrzeug, umfassend wenigstens eine Flüssigkeitspumpe zum Zirkulieren von Wärmetransportflüssigkeit im Flüssigkeitskreislauf (1), einen ersten Wärmtauscher und einen zweiten Wärmetauscher sowie zum Abscheiden von Blasen aus der Wärmetransportflüssigkeit einen Blasenabscheider (3) mit einer Entgasungskammer (7) und jeweils in den Flüssigkeitskreislauf (1) eingebundenen Flüssigkeitszuleitung (5) zur Entgasungskammer (7) und Flüssigkeitsableitung (9) aus der Entgasungskammer (7), wobei der Strömungsquerschnitt in der Entgasungskammer (7) größer als der Strömungsquerschnitt sowohl der Flüssigkeitszuleitung (5) als auch der Flüssigkeitsableitung (9) ist, und die Entgasungskammer (7) über ihre Öffnungen (11, 13) für die Flüssigkeitszuleitung (5) und für die Flüssigkeitsableitung (9) hinausragt, wobei im oberen Bereich des Blasenabscheiders (3) oder unmittelbar über dem Blasenabscheider (3) ein Entlüftungsventil (17) zum Auslassen von in der Entgasungskammer (7) aus der Wärmetransportflüssigkeit entgasten Gas nach außen angeordnet ist. Ferner betrifft die Erfindung ein Fahrzeug mit dem Flüssigkeitskreislauf (1) sowie die Verwendung des Blasenabscheiders (3) als Mikroblasenabscheider in dem Flüssigkeitskreislauf (1) des Fahrzeugs. (Fig. 1)

## Beschreibung

### Gebiet der Technik:

Die Erfindung betrifft einen Flüssigkeitskreislauf für ein Fahrzeug gemäß dem Oberbegriff des Anspruchs 1. Der Flüssigkeitskreislauf umfasst wenigstens eine Flüssigkeitspumpe zum Zirkulieren von Wärmetransportflüssigkeit, einen ersten und zweiten Wärmetauscher sowie zum Abscheiden von Blasen aus der Wärmetransportflüssigkeit einen Blasenabscheider mit einer Entgasungskammer. Ein derartiger Flüssigkeitskreislauf ist beispielsweise als ein Heizkreislauf ausgebildet, in dem mit der Wärmetransportflüssigkeit Wärme von einer Wärmequelle zum Heizen von Luft für den oder im Fahrzeuginnenraum transportiert wird. In der im Flüssigkeitskreislauf schnell strömenden Wärmetransportflüssigkeit entstehen Blasen insbesondere beim Erwärmen der Flüssigkeit als auch durch Kavitation. Bei höheren Temperaturen verringert sich nach dem Henry-Gesetz die Löslichkeit von Gasen in der Wärmetransportflüssigkeit, wie beispielsweise von Sauerstoff in flüssigem Wasser oder Wasser-Glykol-Gemisch, sodass vorher gelöstes Gas aus der Flüssigkeit wieder gasförmig wird. Die Blasen in der Flüssigkeit sind oftmals in der Größe von kleinen Mikroblasen, die bei schneller Strömung in der Wärmetransportflüssigkeit verbleiben, was wegen der geringeren Wärmekapazität von Gasen wie vor allem Luft die Wärmeaufnahmefähigkeit der Wärmetransportflüssigkeit verringert und sich damit negativ auf die Effizienz des Flüssigkeitskreislaufs für den Wärmetransport auswirkt. Außerdem erhöht sich bei Sauerstoff in den Blasen die Gefahr von Korrosion in den Leitungen und Komponenten des Flüssigkeitskreislaufs. Ferner können Blasen in der Flüssigkeit zu Druckschwankungen, Geräuschen und Fehlfunktionen bis hin zum Ausfall des Systems führen. Ferner betrifft die Erfindung ein Fahrzeug mit einem derartigen Flüssigkeitskreislauf sowie die Verwendungsart eines als Mikroblasenabscheider ausgebildeten Blasenabscheiders.

### Stand der Technik:

Bekannt sind Flüssigkeitskreisläufe mit Blasenabscheidern für Fahrzeuge. In FR3082441 A3 und in EP3961006 B1 sind Flüssigkeitskreisläufe für Kraftfahrzeuge offenbart, in denen Blasenabscheider ein oder mehrere Wirbeltöpfe umfassen. In den Wirbeltöpfen ist strömende Wärmetransportflüssigkeit um eine Wirbelachse rotierbar, wobei sich Blasen in der Wärmetransportflüssigkeit wegen der geringeren Dichte nach innen ins Zentrum zur Wirbelachse hin orientieren und so von der dichteren Flüssigkeit getrennt werden. Der im oberen Bereich dieser Blasenabscheider für das aus der Wärmetransportflüssigkeit entgaste Gas angeordnete Auslass bildet einen Anschluss für ein Rohr. Wie in Figur 10 von EP3961006 B1 dargestellt, führt das Rohr zu einem Ausgleichsbehälter. In den EP1630016 B1, US2023/0145211 A1 und WO2021235991 A1 sind Flüssigkeitskreisläufe für Fahrzeuge offenbart, bei denen die Blasenabscheider nach dem Prinzip der Verringerung der Fließgeschwindigkeit der Wärmetransportflüssigkeit durch Vergrößerung des Strömungsquerschnitts arbeiten. Der jeweilige Auslass für das dabei entgaste Gas befindet sich im oberen Bereich der dortigen Blasenabscheider und ist über eine Entlüftungsleitung mit einem Ausgleichsbehälter verbunden, zu dem das aus der Wärmetransportflüssigkeit entgaste Gas wie insbesondere Luft beziehungsweise deren Bestandteile strömt. Ein derartiger Anschluss des Blasenabscheiders an einen Ausgleichbehälter hat die Nachteile, dass ein Ausgleichsbehälter und zu diesem vom Blasenabscheider eine Entlüftungsleitung erforderlich sind, sowie der Blasenabscheider unter dem Flüssigkeitsspiegel des Ausgleichsbehälters liegen muss. In DE102013201332 A1 ist ein Flüssigkeitskreislauf eines Kühlsystems für eine Fahrzeugbatterie mit einem Blasenabscheider offenbart, bei dem die Luft durch eine luftdurchlässige Membran entweicht, wobei die Membran für ein schnelles Entweichen von Luft wie insbesondere beim Befüllvorgang des Flüssigkeitskreislaufs nicht ausreicht und dafür zusätzlich eine Entlüftungsschraube vorgesehen ist.

Ferner sind Flüssigkeitskreisläufe mit Basenabscheider in DE2810583 A1, DE19810005 A1, WO2016/138599 A1 und DE202008012288 U1 offenbart, wobei sich diese hauptsächlich auf die anderen technischen Gebiete mit stationären Flüssigkeitskreisläufen für Gewässer oder in Heizungs- oder Kühlanlagen von Gebäuden beziehen. Im stationären Bereich fehlen besondere Anforderungen an den Flüssigkeitskreislauf mit Blasenabscheider für Fahrzeuge. Nicht die Verhinderung von Strömungsgeräuschen, sondern die Entgasung beim Befüllvorgang und beim Betrieb während der Fahrt stehen bei einem Flüssigkeitskreislauf mit Blasenabscheider für ein Fahrzeug im Vordergrund.

In US2006/0086388 A1 und DE102020125794 A1 sind Beispiele von Blasenabscheidern gezeigt.

Der im Anspruch 1 angegebenen Erfindung liegt also das Problem zugrunde, dass die bisherigen Flüssigkeitskreisläufe mit Blasenabscheidern für Fahrzeuge beim Blasenabscheider insbesondere hinsichtlich dessen Positionierens und des Ableitens von entgastem Gas unzureichend sind. Es ist daher Aufgabe, einen verbesserten Flüssigkeitskreislauf mit Blasenabscheider für ein Fahrzeug bereitzustellen.

Eine entsprechende Aufgabe ist die Bereitstellung eines Fahrzeugs mit einem derartigen Flüssigkeitskreislauf mit Blasenabscheider.

Ferner ist es eine weitere Aufgabe die Bereitstellung einer vorteilhaften Verwendungsart eines als Mikroblasenabscheider ausgebildeten Blasenabscheiders.

### Zusammenfassung der Erfindung:

Das der im Anspruch 1 angegebenen Erfindung zugrundeliegende Problem wird durch die im Anspruch 1 aufgeführten Merkmale gelöst. Dadurch, dass der Flüssigkeitskreislauf für ein Fahrzeug wenigstens eine Flüssigkeitspumpe zum Zirkulieren von Wärmetransportflüssigkeit im Flüssigkeitskreislauf, einen ersten Wärmtauscher und einen zweiten Wärmetauscher sowie zum Abscheiden von Blasen aus der Wärmetransportflüssigkeit einen Blasenabscheider mit einer Entgasungskammer und jeweils in den Flüssigkeitskreislauf eingebundenen Flüssigkeitszuleitung zur Entgasungskammer und Flüssigkeitsableitung aus der Entgasungskammer umfasst, wobei der Strömungsquerschnitt in der Entgasungskammer größer als der Strömungsquerschnitt sowohl der Flüssigkeitszuleitung als auch der Flüssigkeitsableitung ist, und die Entgasungskammer über ihre Öffnungen für die Flüssigkeitszuleitung und für die Flüssigkeitsableitung hinausragt, und im oberen Bereich des Blasenabscheiders oder unmittelbar über dem Blasenabscheider ein Entlüftungsventil zum Auslassen von in der Entgasungskammer aus der Wärmetransportflüssigkeit entgasten Gas nach außen angeordnet ist, wird das Problem gelöst.

Das aus der Wärmetransportflüssigkeit entgaste Gas ist insbesondere Luft beziehungsweise deren Bestandteile, wie beispielsweise Sauerstoff.

Nach außen aus dem Entlüftungsventil auslassen bedeutet, dass das Gas aus dem Flüssigkeitskreislauf heraus, aber nicht weiter in einen Behälter strömt.

Der Flüssigkeitskreislauf für ein Fahrzeug hat die Vorteile, dass materialsparend und platzsparend eine Entlüftungsleitung vom Blasenabscheider zu einem Ausgleichsbehälter entfällt, für den Blasenabscheider kein Ausgleichsbehälter erforderlich ist und der Blasenabscheider nicht darauf beschränkt ist, unter dem Flüssigkeitsspiegel eines Ausgleichsbehälters zu liegen, wodurch die Position des Blasenabscheiders davon ungebunden an nahezu beliebiger Stelle im Flüssigkeitskreislauf wählbar ist. Durch das Entlüftungsventil kann beim Vorgang des Befüllens des Flüssigkeitskreislaufs mit Wärmetransportflüssigkeit ausreichend schnell die Luft entweichen, sodass eine zusätzliche Entlüftungsöffnung für den Befüllvorgang entbehrlich ist.

In den Unteransprüchen sind vorteilhafte Ausgestaltungen, Weiterbildungen und Verbesserungen des jeweiligen Gegenstandes der Erfindung angegeben.

Von Vorteil ist eine Ausführung, bei der der Blasenabscheider als ein Mikroblasenabscheider mit ein oder mehreren Mikroblasenentgasungselementen in der Entgasungskammer ausgebildet ist. Mikroblasen haben einen Radius von unter 50 µm. Sie lassen sich wegen ihres kleinen Volumens mit geringem Auftrieb nur schwer aus einer Flüssigkeit trennen und verbleiben lange schwebend in der Strömung. Ein Mikroblasenabscheider entfernt mithilfe eines oder mehrerer Mikroblasenentgasungselementen, wie beispielsweise einem Drahtgeflecht oder einem Metallgranulat oder Pall-Ringen, auch diese kleinen Blasen aus der Flüssigkeit, was die Effizienz des Flüssigkeitskreislaufs steigert und Korrosion sowie die Gefahr von Kavitationsschädigung und Kavitationsgeräuschen verringert.

Vorzugsweise verjüngt sich die Entgasungskammer des Blasenabscheiders nach oben hin und weist an ihrem oberen Ende einen Zugang zum Entlüftungsventil auf. Mit dieser Ausgestaltung wird besonders gut vermieden, dass Wärmetransportflüssigkeit durch das Entlüftungsventil gelangt.

Nach einer vorteilhaften Weiterbildung ist das Entlüftungsventil abhängig vom Füllstand der Wärmetransportflüssigkeit in der Entgasungskammer automatisch öffenbar. Das Entlüftungsventil ist so im ausreichenden Maße je nach Höhe des Füllstandes von Wärmetransportflüssigkeit in der Entgasungskammer geöffnet.

Bevorzugt weist der Blasenabscheider beim Entlüftungsventil eine hygroskopische Schutzkappe zum Abdichten bei Berührung mit Wasser auf. Dadurch kann insbesondere Wasser oder ein Wasser-Glykol-Gemisch als Wärmetransportflüssigkeit nicht aus dem Entlüftungsventil nach außen austreten, was den Flüssigkeitskreislauf bezüglich der Wärmetransportflüssigkeit dichthält.

Nach einer vorteilhaften Ausführung ist die Entgasungskammer als Wirbeltopf ausgebildet, in dem strömende Wärmetransportflüssigkeit als Wirbel mit vertikaler Wirbelachse rotierbar ist. Damit lassen sich Blasen von der Wärmetransportflüssigkeit besonders gut trennen.

Vorzugsweise sind der erste Wärmetauscher zur Wärmeaufnahme der Wärmetransportflüssigkeit und der zweite Wärmetauscher zur Wärmeabgabe aus der Wärmetransportflüssigkeit vorgesehen und der Blasenabscheider ist in Strömungsrichtung der Wärmetransportflüssigkeit stromabwärts der Flüssigkeitspumpe und des ersten Wärmetauschers und stromaufwärts des zweiten Wärmetauschers angeordnet. So können gut sich durch die Flüssigkeitspumpe und Erwärmung im ersten Wärmetauscher in der Wärmetransportflüssigkeit gebildete Blasen im Blasenabscheider entgast werden. Besonders vorteilhaft ist die Anordnung des Blasenabscheiders in Strömungsrichtung der Wärmetransportflüssigkeit direkt stromabwärts des zur Wärmeaufnahme der Wärmetransportflüssigkeit vorgesehenen ersten Wärmetauschers. Dort ist die Temperatur der Wärmetransportflüssigkeit bei Betrieb besonders hoch, sodass die Löslichkeit von Gas darin gering ist und somit die Entgasung im Blasenabscheider sehr effektiv ist.

Nach einer vorteilhaften Ausführung ist der Flüssigkeitskreislauf als für Wasser oder ein Wasser-Glykol-Gemisch als seine Wärmetransportflüssigkeit vorgesehener Heizkreislauf mit zumindest dem zweiten Wärmetauscher zum Heizen von Luft für einen oder in einem Fahrzeuginnenraum ausgebildet. Ein derartiger Flüssigkeitskreislauf ist zum Heizen eines Fahrzeuginnenraums besonders gut geeignet sowie effizient.

Vorzugsweise ist im Flüssigkeitskreislauf der Blasenabscheider in Strömungsrichtung der Wärmetransportflüssigkeit direkt stromaufwärts der Flüssigkeitspumpe oder nur über eine Flüssigkeitsleitung mit der Flüssigkeitspumpe verbunden stromaufwärts der Flüssigkeitspumpe angeordnet. Damit können größere Blasen aus dem Flüssigkeitskreislauf abgeschieden werden, die sonst in der Flüssigkeitspumpe zerteilt und dadurch als mehrere kleinere Blasen schlechter abscheidbar wären. Die Entgasung der Flüssigkeit ist damit verbessert.

Die Aufgabe für ein Fahrzeug wird durch ein Fahrzeug, das einen erfindungsgemäßen Flüssigkeitskreislauf umfasst, gelöst. Hinsichtlich der Vorteile sowie vorteilhaften Ausführungen und Weiterbildungen gelten entsprechend die diesbezüglichen obigen Angaben zu dem erfindungsgemäßen Flüssigkeitskreislauf. Vor allem ein Kraftfahrzeug, wie insbesondere ein Omnibus, ist als ein derartiges Fahrzeug von Vorteil.

Nach einer vorteilhaften Weiterbildung umfasst das Fahrzeug zusätzlich zu dem erfindungsgemäßen Flüssigkeitskreislauf einen oder mehrere weitere erfindungsgemäße Flüssigkeitskreisläufe sowie einen Ausgleichsbehälter, der an zwei oder mehr der Flüssigkeitskreisläufe jeweils saugseitig angeschlossen ist. Mit dem einen gemeinsamen Ausgleichsbehälter werden weitere Ausgleichsbehälter entbehrlich, was Platz, Material und Gewicht einspart. Besonders vorteilhaft ist dabei eine Ausführung, bei der die saugseitigen Anschlüsse der Flüssigkeitskreisläufe an den Ausgleichsbehälter eine gemeinsame Sammelleitung zum Ausgleichsbehälter umfassen. Dieses spart Gewicht und Material ein und am Ausgleichsbehälter ist lediglich die Sammelleitung statt mehrerer einzelner Stichleitungen angeschlossen.

Die Aufgabe bezüglich einer Verwendungsart eines als Mikroblasenabscheider ausgebildeten Blasenabscheiders wird durch die Verwendung des Mikroblasenabscheiders mit ein oder mehreren Mikroblasenentgasungselementen in seiner Entgasungskammer und seinen für ihn in dem erfindungsgemäßen Flüssigkeitskreislauf vorgesehenen technischen Merkmalen als der Blasenabscheider in dem erfindungsgemäßen Flüssigkeitskreislauf in einem Fahrzeug, wie insbesondere einem Kraftfahrzeug, gelöst. Eine derartige Verwendung erhöht die Wärmekapazität der Wärmetransportflüssigkeit und damit die Effizienz des Flüssigkeitskreislaufs im Fahrzeug.

Kurze Beschreibung der Zeichnungen:
Anhand der Zeichnungen werden Ausführungsbeispiele der Erfindung erläutert.

Es zeigen
Fig. 1 in schematischer vertikaler Schnittdarstellung ein Ausführungsbeispiel eines Blasenabscheiders in einem erfindungsgemäßen Flüssigkeitskreislauf;
Fig. 2 in schematischer vertikaler Schnittdarstellung ein weiteres Ausführungsbeispiel eines Blasenabscheiders in einem erfindungsgemäßen Flüssigkeitskreislauf;
Fig. 3a in schematischer vertikaler Schnittdarstellung ein weiteres Ausführungsbeispiel eines Blasenabscheiders in einem erfindungsgemäßen Flüssigkeitskreislauf;
Fig. 3b in schematischer Ansicht von oben das in Fig. 3a gezeigte Ausführungsbeispiel eines Blasenabscheiders in einem erfindungsgemäßen Flüssigkeitskreislauf;
Fig. 4 in schematischer Blockdarstellung ein Ausführungsbeispiel eines erfindungsgemäßen Flüssigkeitskreislaufs;
Fig. 5 in schematischer Darstellung ein Ausführungsbeispiel eines Fahrzeugs mit einem erfindungsgemäßen Flüssigkeitskreislauf;
Fig. 6 in schematischer Blockdarstellung ein weiteres Ausführungsbeispiel eines erfindungsgemäßen Flüssigkeitskreislaufs; und
Fig. 7 in schematischer Darstellung ein Ausführungsbeispiel eines Fahrzeugs mit zwei erfindungsgemäßen Flüssigkeitskreisläufen.

Ausführliche Beschreibung der Erfindung:
Alle Zeichnungen sind schematisch zu verstehen. Auf maßstabsgetreue Abbildungen wurde zum Zwecke erhöhter Klarheit der Darstellung verzichtet.

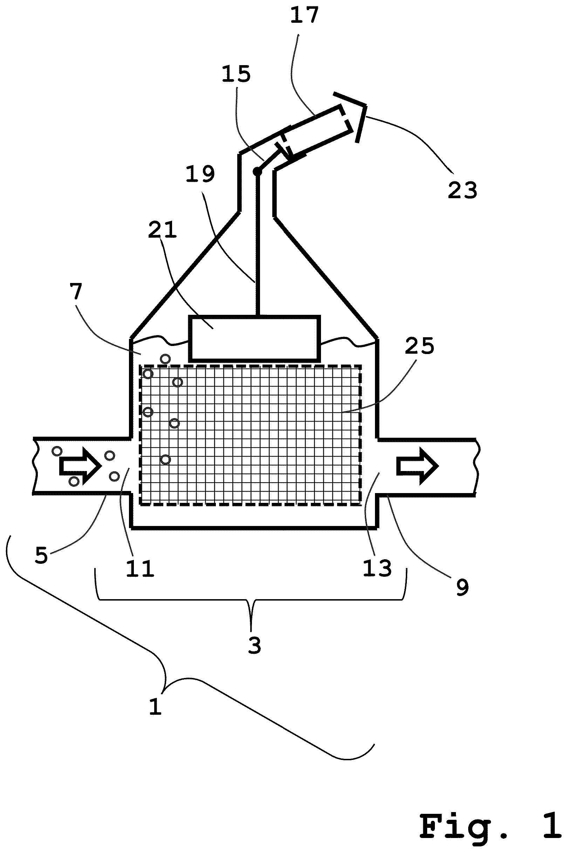

In Fig. 1 ist im vertikalen Schnitt ein Ausführungsbeispiel eines Blasenabscheiders 3 in einem erfindungsgemäßen für ein Fahrzeug, wie beispielsweise ein Kraftfahrzeug, vorgesehenen Flüssigkeitskreislauf 1 gezeigt. Im Flüssigkeitskreislauf 1 ist eine Wärmetransportflüssigkeit durch eine Flüssigkeitspumpe angetrieben zirkulierbar. Der Blasenabscheider 3 ist als Mikroblasenabscheider ausgebildet. In seiner Entgasungskammer 7 befindet sich das Mikroblasenentgasungselement 25, was in diesem Fall als ein Drahtgeflecht ausgebildet ist. Denkbar sind auch andere Arten geeigneter Mikroblasenentgasungselemente 25, wie beispielsweise ein Metallgranulat oder Pall-Ringe in der Entgasungskammer 7. Zum Blasenabscheider 3 führt eine in den Flüssigkeitskreislauf 1 eingebundene Flüssigkeitszuleitung 5, durch die zuvor in der Flüssigkeitspumpe des Flüssigkeitskreislauf 1 gepumpte und im ersten Wärmetauscher erwärmte Wärmetransportflüssigkeit in die Entgasungskammer 7 des Blasenabscheiders 3 strömbar ist. Die Entgasungskammer 7 ist im unteren Bereich topfförmig und erstreckt sich kegelförmig nach oben verjüngend. In ihr werden mithilfe des Mikroblasenentgasungselements 25 Blasen wie vor allem Mikroblasen aus der Wärmetransportflüssigkeit entgast. Aus der Entgasungskammer 7 führt gegenüber der Flüssigkeitszuleitung 5 die Flüssigkeitsableitung 9 hinaus, durch welche die entgaste Wärmetransportflüssigkeit wie beispielsweise Wasser oder ein Wasser-Glykol-Gemisch im Flüssigkeitskreislauf 1 weiter zum zweiten Wärmetauscher strömt. Die Entgasungskammer 7 ragt über ihre Öffnungen 11, 13 für die Flüssigkeitszuleitung 5 und für die Flüssigkeitsableitung 9 hinaus. An ihrem oberen Ende führt ein Zugang 15 zum Entlüftungsventil 17. Dieses dient zum Auslassen von aus der Wärmetransportflüssigkeit entgasten Gas, wie insbesondere Luft beziehungsweise deren Bestandteile, nach außen in die Umgebung. Das Entlüftungsventil 17 ist im oberen Bereich des Blasenabscheiders 3 angeordnet und ist über ein Gestänge 19 mit einem Schwimmkörper 21 so verbunden, dass es abhängig vom Füllstand der Wärmetransportflüssigkeit in der Entgasungskammer 7 automatisch öffenbar ist. Mit einer hygroskopischen Schutzkappe 23 beim Entlüftungsventil 17, die bei Berührung mit Wasser abdichtet, wird verhindert, dass wasserhaltige Wärmetransportflüssigkeit durch das Entlüftungsventil 17 entweichen kann. Die hygroskopische Schutzkappe 23 befindet sich in diesem Fall auf der Ausströmseite des Entlüftungsventils 17. Der Strömungsquerschnitt in der Entgasungskammer 7 ist deutlich größer als der Strömungsquerschnitt sowohl der Flüssigkeitszuleitung 5 als auch der Flüssigkeitsableitung 9. Das für die Wärmetransportflüssigkeit vorgesehene Volumen der Entgasungskammer 7 ist für ein Entgasen von Mikroblasen aus der Wärmetransportflüssigkeit ausreichend groß.

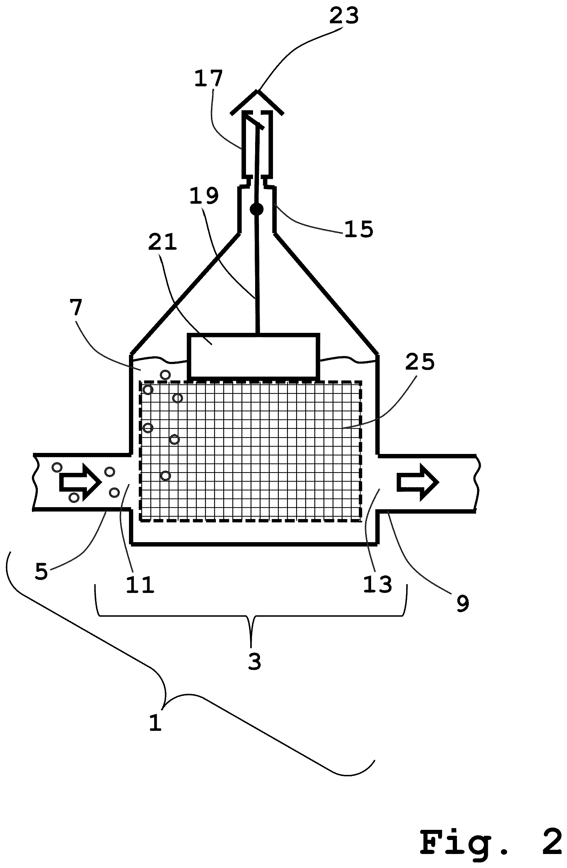

In Fig. 2 ist im vertikalen Schnitt ein weiteres Ausführungsbeispiel eines Blasenabscheiders 3 in einem erfindungsgemäßen für ein Fahrzeug, wie beispielsweise ein Kraftfahrzeug, vorgesehenen Flüssigkeitskreislauf 1 gezeigt. Im Flüssigkeitskreislauf 1 ist eine Wärmetransportflüssigkeit durch eine Flüssigkeitspumpe angetrieben zirkulierbar. Der Blasenabscheider 3 ist als Mikroblasenabscheider ausgebildet. In seiner Entgasungskammer 7 befindet sich das Mikroblasenentgasungselement 25, was in diesem Fall als ein Drahtgeflecht ausgebildet ist. Denkbar sind auch andere Arten geeigneter Mikroblasenentgasungselemente 25, wie beispielsweise ein Metallgranulat oder Pall-Ringe in der Entgasungskammer 7. Zum Blasenabscheider 3 führt eine in den Flüssigkeitskreislauf 1 eingebundene Flüssigkeitszuleitung 5, durch die zuvor in der Flüssigkeitspumpe des Flüssigkeitskreislauf 1 gepumpte und im ersten Wärmetauscher erwärmte Wärmetransportflüssigkeit in die Entgasungskammer 7 des Blasenabscheiders 3 strömbar ist. Die Entgasungskammer 7 ist im unteren Bereich topfförmig und erstreckt sich kegelförmig nach oben verjüngend. In ihr werden mithilfe des Mikroblasenentgasungselements 25 Blasen wie vor allem Mikroblasen aus der Wärmetransportflüssigkeit entgast. Aus der Entgasungskammer 7 führt gegenüber der Flüssigkeitszuleitung 5 die Flüssigkeitsableitung 9 hinaus, durch welche die entgaste Wärmetransportflüssigkeit wie beispielsweise Wasser oder ein Wasser-Glykol-Gemisch im Flüssigkeitskreislauf 1 weiter zum zweiten Wärmetauscher strömt. Die Entgasungskammer 7 ragt über ihre Öffnungen 11, 13 für die Flüssigkeitszuleitung 5 und für die Flüssigkeitsableitung 9 hinaus. An ihrem oberen Ende führt ein Zugang 15 zum separaten Entlüftungsventil 17, welches sich unmittelbar über dem Blasenabscheider 3 befindet. Dieses dient zum Auslassen von aus der Wärmetransportflüssigkeit entgasten Gas, wie insbesondere Luft beziehungsweise deren Bestandteile, nach außen in die Umgebung. Das Entlüftungsventil 17 ist mittels eines Gestänges 19 mit einem Schwimmkörper 21 des Blasenabscheiders 3 so verbunden, dass das Entlüftungsventil 17 abhängig vom Füllstand der Wärmetransportflüssigkeit in der Entgasungskammer 7 automatisch öffenbar ist. Die hygroskopische Schutzkappe 23 befindet sich auf der Ausströmseite des Entlüftungsventils 17. Der Strömungsquerschnitt in der Entgasungskammer 7 ist deutlich größer als der Strömungsquerschnitt sowohl der Flüssigkeitszuleitung 5 als auch der Flüssigkeitsableitung 9.

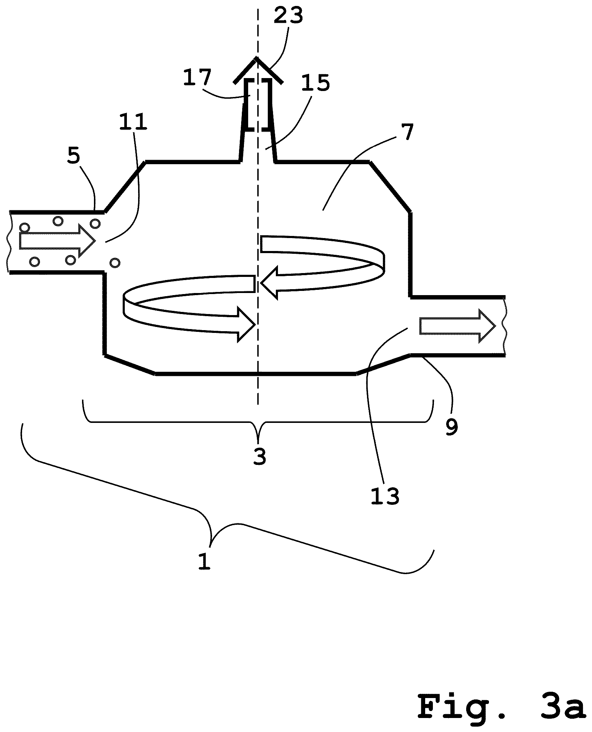

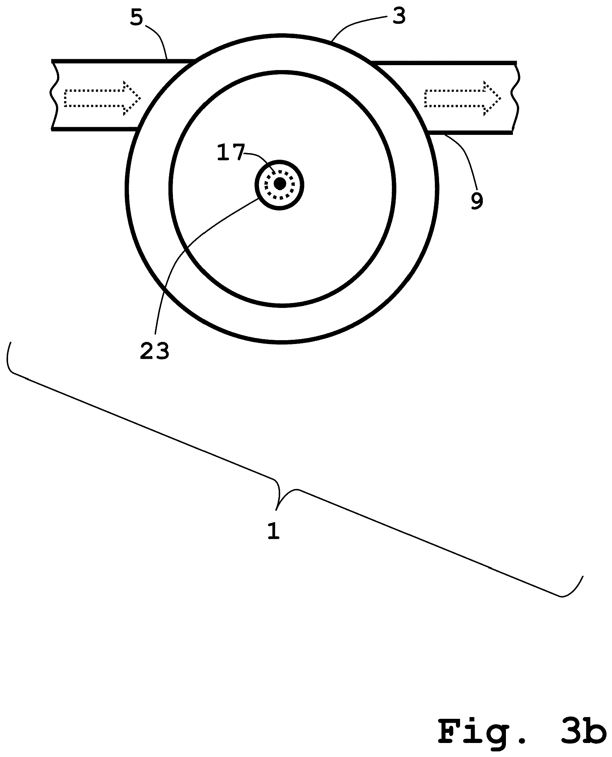

In Fig. 3a ist im vertikalen Schnitt und in Fig. 3b in Ansicht von oben ein weiteres Ausführungsbeispiel eines Blasenabscheiders 3 in einem erfindungsgemäßen Flüssigkeitskreislauf 1 für ein Fahrzeug, wie insbesondere ein Kraftfahrzeug, dargestellt. Im Flüssigkeitskreislauf 1 ist eine Wärmetransportflüssigkeit, wie beispielsweise Wasser oder ein Wasser-Glykol-Gemisch, durch eine Flüssigkeitspumpe angetrieben zirkulierbar. Zum Blasenabscheider 3 führt eine in den Flüssigkeitskreislauf 1 eingebundene Flüssigkeitszuleitung 5, durch die zuvor in der Flüssigkeitspumpe des Flüssigkeitskreislaufs 1 gepumpte und im ersten Wärmetauscher erwärmte Wärmetransportflüssigkeit in die Entgasungskammer 7 des Blasenabscheiders 3 strömen kann. Die Entgasungskammer 7 ist als Wirbeltopf ausgebildet, in dem strömende Wärmetransportflüssigkeit als Wirbel rotierbar ist. Bei Betrieb wird die Strömung der Wärmetransportflüssigkeit in der Entgasungskammer 7 mit Hilfe eines Umlenkelements so gelenkt, dass sie einen Wirbel mit vertikaler Wirbelachse im Zentrum der Entgasungskammer 7 bildet. Dadurch trennen sich Blasen aus der Wärmetransportflüssigkeit in Richtung der zentralen vertikalen Wirbelachse. Aus der Entgasungskammer 7 führt gegenüber der Flüssigkeitszuleitung 5 die tiefer gelegene Flüssigkeitsableitung 9 hinaus, durch welche die entgaste Wärmetransportflüssigkeit im Flüssigkeitskreislauf 1 weiter zum zweiten Wärmetauscher strömt. Die Entgasungskammer 7 ragt über ihre Öffnungen 11, 13 für die Flüssigkeitszuleitung 5 und für die Flüssigkeitsableitung 9 hinaus. Das Entlüftungsventil 17 ist im oberen Bereich des Blasenabscheiders 3 angeordnet.

An ihrem oberen Ende führt ein Zugang 15 zum Entlüftungsventil 17. Dieses dient zum Auslassen von aus der Wärmetransportflüssigkeit entgasten Gas, wie insbesondere Luft beziehungsweise deren Bestandteile, nach außen in die Umgebung. Mit einer hygroskopischen Schutzkappe 23 auf der Ausströmseite des Entlüftungsventils 17, die bei Berührung mit Wasser abdichtet, wird verhindert, dass wasserhaltige Wärmetransportflüssigkeit durch das Entlüftungsventil 17 entweichen kann. Der Strömungsquerschnitt in der Entgasungskammer 7 ist größer als der Strömungsquerschnitt sowohl der Flüssigkeitszuleitung 5 als auch der Flüssigkeitsableitung 9.

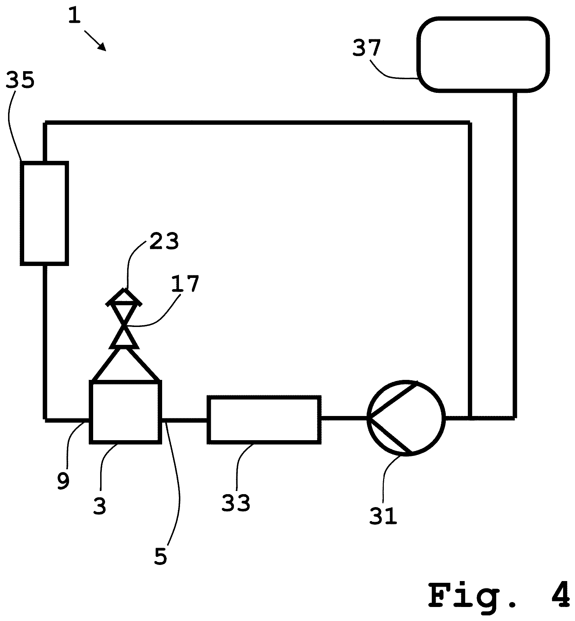

In Fig. 4 ist in Blockdarstellung ein Ausführungsbeispiel eines erfindungsgemäßen Flüssigkeitskreislaufs 1 für ein Fahrzeug gezeigt. Er ist als ein Heizkreislauf zum Heizen von Luft für einen oder in einem Fahrzeuginnenraum vorgesehen. Mit der Flüssigkeitspumpe 31 wird Wärmetransportflüssigkeit wie beispielweise Wasser oder ein Wasser-Glykol-Gemisch gepumpt, sodass sie im Flüssigkeitskreislauf 1 zirkuliert. Der Blasenabscheider 3 ist direkt stromabwärts des ersten Wärmetauschers 33 angeordnet. Die Wärmetransportflüssigkeit fließt bei Betrieb durch die Flüssigkeitszuleitung 5 in die Entgasungskammer des Blasenabscheiders 3 und darauf weiter durch die Flüssigkeitsableitung 9. Im ersten Wärmetauscher 33 nimmt die von der Flüssigkeitspumpe 31 kommende Wärmetransportflüssigkeit Wärme auf. Dieses erfolgt beispielsweise durch Wärmeabgabe aus einem Kältemittel einer Wärmepumpe. Im stromabwärts vom Blasenabscheider 3 gelegenen zweiten Wärmetauscher 35 im Flüssigkeitskreislauf 1 erfolgt die Wärmeabgabe von der Wärmetransportflüssigkeit, wie beispielsweise an Luft für den Fahrzeuginnenraum. An den Flüssigkeitskreislauf 1 ist saugseitig ein Ausgleichsbehälter 37 angeschlossen. Denkbar sind auch Ausführungen von erfindungsgemäßen Flüssigkeitskreisläufen 1 ohne Ausgleichsbehälter 37, bei denen beispielsweise der Ausgleich mittels einer elastischen Membran erfolgt.

Der Blasenabscheider 3 ist ein erfindungsgemäß vorgesehener Blasenabscheider 3 und als Mikroblasenabscheider mit ein oder mehreren Mikroblasenentgasungselementen in der Entgasungskammer ausgebildet. Der Blasenabscheider 3 ist der in Fig. 1 oder der in Fig. 2 mit den dortigen Merkmalen gezeigte Blasenabscheider 3, wobei bei dem in Fig. 2 gezeigten Blasenabscheider 3 sich das Entlüftungsventil 17 als separates Element unmittelbar über dem Blasenabscheider 3 befindet.

Denkbar ist auch eine Variante des erfindungsgemäßen Flüssigkeitskreislaufs 1 mit einem im Fig. 3a und 3b gezeigten Blasenabscheider.

Durch das im oberen Bereich des Blasenabscheiders 3 oder unmittelbar über ihm angeordnete Entlüftungsventil 17 kann aus der Wärmetransportflüssigkeit in die Entgasungskammer entgastes Gas wie insbesondere Luft nach außen in die Umgebung entweichen. Eine Entlüftungsleitung vom Blasenabscheider 3 zum Ausgleichbehälter 37 existiert nicht. Auf der Ausströmseite des Entlüftungsventils 17 befindet sich eine hygroskopische Schutzkappe 23, die bei Berührung mit Wasser abdichtet und damit verhindert, dass wasserhaltige Wärmetransportflüssigkeit durch das Entlüftungsventil 17 entweichen kann.

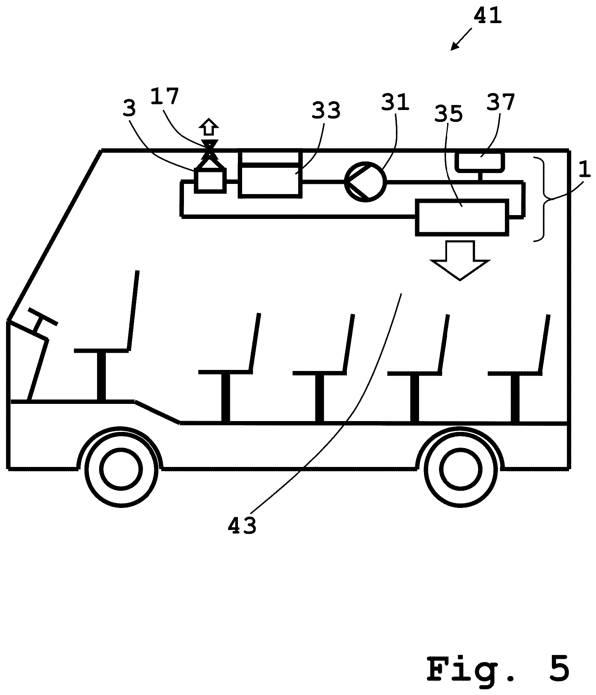

In Fig. 5 ist ein Ausführungsbeispiel eines Fahrzeugs 41 mit einem erfindungsgemäßen Flüssigkeitskreislauf 1 dargestellt. Das Fahrzeug 41 ist ohne darauf beschränkt zu sein in diesem Fall ein Omnibus. Der Flüssigkeitskreislauf 1 ist der in Fig. 4 gezeigte. Im ersten Wärmetauscher 33 des Flüssigkeitskreislaufs 1 nimmt die von der Flüssigkeitspumpe 31 gepumpte Wärmetransportflüssigkeit Wärme auf und gibt sie im zweiten Wärmetauscher 35 zum Heizen von Luft für den Fahrzeuginnenraum 43 wieder ab. Der als Mikroblasenabscheider ausgebildete Blasenabscheider 3 mit seinem Entlüftungsventil 17 oder mit separatem Entlüftungsventil 17 unmittelbar über ihm befindet sich im Flüssigkeitskreislauf 1 direkt stromabwärts des ersten Wärmetauschers 33. Das im Blasenabscheider 3 entgaste Gas, wie vor allem Luft beziehungsweise deren Bestandteile, entweicht durch das Entlüftungsventil 17 nach außen in die Umgebung. Es existiert keine Entlüftungsleitung vom Blasenabscheider 3 zum saugseitig an den Flüssigkeitskreislauf 1 angeschlossenen Ausgleichsbehälter 37.

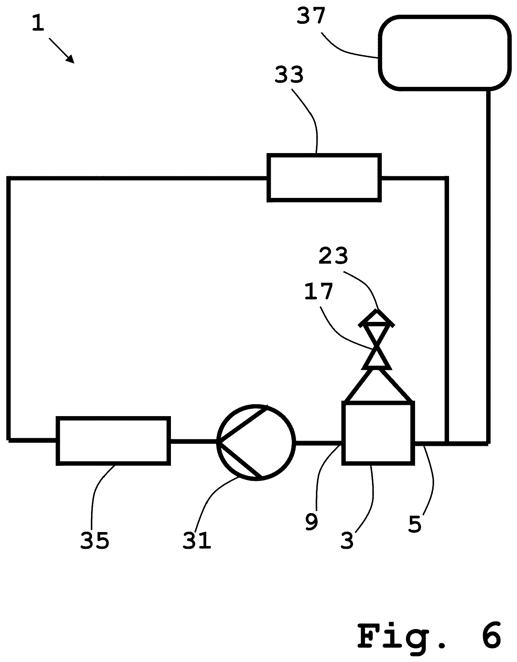

In Fig. 6 ist in Blockdarstellung ein weiteres Ausführungsbeispiel eines erfindungsgemäßen Flüssigkeitskreislaufs 1 für ein Fahrzeug gezeigt. Er ist als ein Heizkreislauf zum Heizen von Luft für einen oder in einem Fahrzeuginnenraum vorgesehen. Mit der Flüssigkeitspumpe 31 wird Wärmetransportflüssigkeit wie beispielweise Wasser oder ein Wasser-Glykol-Gemisch gepumpt, sodass sie im Flüssigkeitskreislauf 1 zirkuliert. Der Blasenabscheider 3 ist nur über eine Flüssigkeitsleitung mit der Flüssigkeitspumpe 31 verbunden stromaufwärts der Flüssigkeitspumpe 31 angeordnet. Die Wärmetransportflüssigkeit fließt bei Betrieb durch die Flüssigkeitszuleitung 5 in die Entgasungskammer des Blasenabscheiders 3 und darauf weiter durch die Flüssigkeitsableitung 9 aus der Entgasungskammer, wobei der Strömungsquerschnitt in der Entgasungskammer größer als der Strömungsquerschnitt sowohl der Flüssigkeitszuleitung 5 als auch der Flüssigkeitsableitung 9 ist, und die Entgasungskammer über ihre Öffnungen für die Flüssigkeitszuleitung 5 und für die Flüssigkeitsableitung 9 hinausragt. Im zweiten Wärmetauscher 35 gibt die von der Flüssigkeitspumpe 31 kommende Wärmetransportflüssigkeit Wärme ab, wie beispielsweise an Luft für den Fahrzeuginnenraum. Im stromaufwärts vom Blasenabscheider 3 im Flüssigkeitskreislauf 1 gelegenen ersten Wärmetauscher 33 erfolgt die Wärmeaufnahme der Wärmetransportflüssigkeit. Dieses erfolgt beispielsweise durch Wärmeabgabe aus einem Kältemittel einer Wärmepumpe an die Wärmetransportflüssigkeit. An den Flüssigkeitskreislauf 1 ist saugseitig ein Ausgleichsbehälter 37 angeschlossen.

Der Blasenabscheider 3 ist ein erfindungsgemäß vorgesehener Blasenabscheider 3 und als Mikroblasenabscheider mit ein oder mehreren Mikroblasenentgasungselementen in der Entgasungskammer ausgebildet. Der Blasenabscheider 3 ist der in Fig. 1 oder der in Fig. 2 gezeigten Blasenabscheider 3, wobei bei dem in Fig. 2 gezeigten Blasenabscheider 3 sich das Entlüftungsventil 17 als separates Element unmittelbar über dem Blasenabscheider 3 befindet.

Denkbar ist auch eine Variante des erfindungsgemäßen Flüssigkeitskreislaufs 1 mit einem im Fig. 3a und 3b gezeigten Blasenabscheider.

Durch das im oberen Bereich des Blasenabscheiders 3 oder unmittelbar über ihm angeordnete Entlüftungsventil 17 kann aus der Wärmetransportflüssigkeit in die Entgasungskammer entgastes Gas wie insbesondere Luft nach außen in die Umgebung entweichen beziehungsweise ausgelassen werden. Auf der Ausströmseite des Entlüftungsventils 17 befindet sich eine hygroskopische Schutzkappe 23, die bei Berührung mit Wasser abdichtet und damit verhindert, dass wasserhaltige Wärmetransportflüssigkeit durch das Entlüftungsventil 17 entweichen kann.

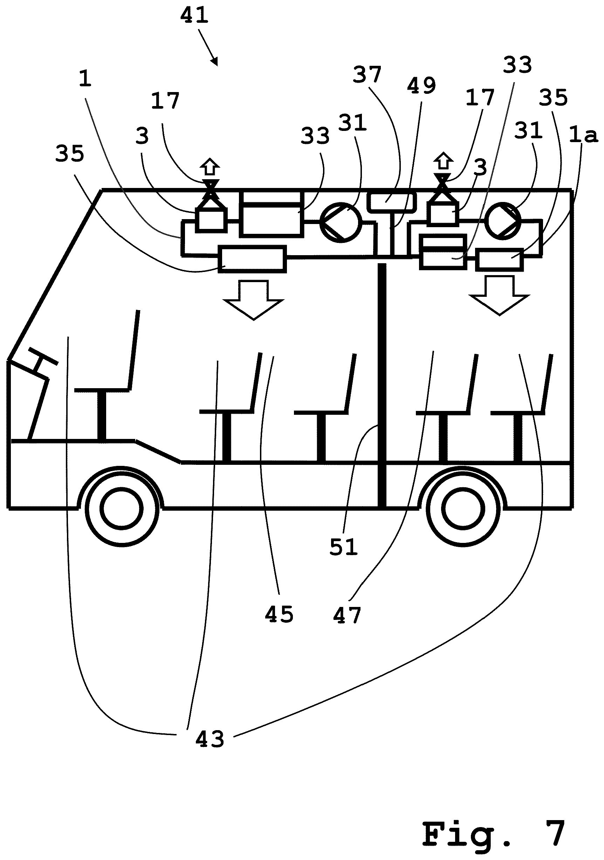

Fig. 7 zeigt in schematischer Darstellung ein Ausführungsbeispiel eines Fahrzeugs 41 mit zwei erfindungsgemäßen Flüssigkeitskreisläufen 1, 1a. Das Fahrzeug 41 ist ohne darauf beschränkt zu sein in diesem Fall ein Omnibus mit erstem und zweitem Fahrgastbereichen 45, 47, die in diesem Fall zwischen sich ein Trennelement 51 zur zumindest teilweisen räumlichen Trennung voneinander aufweisen. Denkbar ist auch eine Ausführungsvariante, bei der sich der zweite Fahrgastbereich 47 in einem vom ersten Fahrgastbereich 45 räumlich getrennten Abteil des Fahrzeugs 41 befindet. Der erste Flüssigkeitskreislauf 1 ist der in Fig. 4 gezeigte erfindungsgemäße Flüssigkeitskreislauf und für den vorderen ersten Fahrgastbereich 45 vorgesehen. Im ersten Wärmetauscher 33 des ersten Flüssigkeitskreislaufs 1 nimmt die von der Flüssigkeitspumpe 31 gepumpte Wärmetransportflüssigkeit Wärme aus einer Wärmequelle auf. Dieses erfolgt zum Beispiel durch Wärmeabgabe eines Kältemittels einer in Fig. 7 nicht dargestellten Wärmepumpe. Die Wärmetransportflüssigkeit gibt die aufgenommen Wärme im zweiten Wärmetauscher 35 zum Heizen von Luft für den ersten Fahrgastbereiche 45 des Fahrzeuginnenraums 43 wieder ab. Der erste Flüssigkeitskreislauf 1 ist ein Heizkreislauf. Der als Mikroblasenabscheider ausgebildete Blasenabscheider 3 mit seinem Entlüftungsventil 17 oder mit separatem Entlüftungsventil 17 unmittelbar über ihm befindet sich im ersten Flüssigkeitskreislauf 1 direkt stromabwärts des ersten Wärmetauschers 33. Der Blasenabscheider 3 ist beispielsweise der in Fig. 2 gezeigte. Das im Blasenabscheider 3 entgaste Gas, wie vor allem Luft beziehungsweise deren Bestandteile, entweicht durch das Entlüftungsventil 17 nach außen in die Umgebung. Der Ausgleichsbehälter 37 ist saugseitig an den ersten Flüssigkeitskreislauf 1 angeschlossenen.

Der zweite Flüssigkeitskreislauf 1a ist der in Fig. 6 gezeigte erfindungsgemäße Flüssigkeitskreislauf. Er ist für den zweiten Fahrgastbereich 47 vorgesehen. Im ersten Wärmetauscher 33 des zweiten Flüssigkeitskreislaufs 1a nimmt die Wärmetransportflüssigkeit Wärme aus einer Wärmequelle auf. Dieses erfolgt zum Beispiel durch Wärmeabgabe eines Kältemittels einer in Fig. 7 nicht dargestellten Wärmepumpe. In Strömungsrichtung der Wärmetransportflüssigkeit im zweiten Flüssigkeitskreislauf 1a stromabwärts des ersten Wärmetauschers 33 sind über Flüssigkeitsleitungen verbunden der Blasenabscheider 3, danach die Flüssigkeitspumpe 31 und darauffolgend der zweite Wärmetauscher 35 angeordnet.

Der als Mikroblasenabscheider ausgebildete Blasenabscheider 3 mit seinem Entlüftungsventil 17 oder mit separatem Entlüftungsventil 17 unmittelbar über ihm befindet sich im zweiten Flüssigkeitskreislauf 1a zwischen dem ersten Wärmetauscher 33 und der stromabwärts angeordneten Flüssigkeitspumpe 31. Der Blasenabscheider 3 ist beispielsweise der in Fig. 2 gezeigte. Das im Blasenabscheider 3 entgaste Gas, wie vor allem Luft beziehungsweise deren Bestandteile, entweicht durch das Entlüftungsventil 17 nach außen in die Umgebung. Saugseitig ist auch an den zweiten Flüssigkeitskreislauf 1a der Ausgleichsbehälter 37 angeschlossenen.

Die saugseitigen Anschlüsse der Flüssigkeitskreisläufe 1,1a an den Ausgleichsbehälter 37 umfassen eine gemeinsame Sammelleitung 49 zum Ausgleichsbehälter 37. Die saugseitige Stichleitung vom ersten Flüssigkeitskreislauf 1 vereint sich mit der saugseitigen Stichleitung des zweiten Flüssigkeitskreislaufs 1a zur gemeinsamen Sammelleitung 49 zum Ausgleichsbehälter 37.

Denkbar ist auch eine derart abgewandelte Ausführung, bei der keine gemeinsame Sammelleitung zum Ausgleichsbehälter 37 führt, sondern die saugseitige Stichleitung des ersten Flüssigkeitskreislaufs 1 getrennt von der saugseitigen Stichleitung des zweiten Flüssigkeitskreislaufs 1a zum Ausgleichsbehälter 37 führt.

Die Wärmetransportflüssigkeit gibt die im ersten Wärmetauscher 33 aufgenommen Wärme im zweiten Wärmetauscher 35 zum Heizen von Luft für den zweiten Fahrgastbereiche 47 des Fahrzeuginnenraums 43 wieder ab. Der zweite Flüssigkeitskreislauf 1a ist auch ein Heizkreislauf.

## Patentansprüche

1. Flüssigkeitskreislauf (1) für ein Fahrzeug (41), umfassend wenigstens eine Flüssigkeitspumpe (31) zum Zirkulieren von Wärmetransportflüssigkeit im Flüssigkeitskreislauf (1), einen ersten Wärmtauscher (33) und einen zweiten Wärmetauscher (35) sowie zum Abscheiden von Blasen aus der Wärmetransportflüssigkeit einen Blasenabscheider (3) mit einer Entgasungskammer (7) und jeweils in den Flüssigkeitskreislauf (1) eingebundenen Flüssigkeitszuleitung (5) zur Entgasungskammer (7) und Flüssigkeitsableitung (9) aus der Entgasungskammer (7), wobei der Strömungsquerschnitt in der Entgasungskammer (7) größer als der Strömungsquerschnitt sowohl der Flüssigkeitszuleitung (5) als auch der Flüssigkeitsableitung (9) ist, und die Entgasungskammer (7) über ihre Öffnungen (11, 13) für die Flüssigkeitszuleitung (5) und für die Flüssigkeitsableitung (9) hinausragt, **dadurch gekennzeichnet,**
**dass** im oberen Bereich des Blasenabscheiders (3) oder unmittelbar über dem Blasenabscheider (3) ein Entlüftungsventil (17) zum Auslassen von in der Entgasungskammer (7) aus der Wärmetransportflüssigkeit entgasten Gas nach außen angeordnet ist.

2. Flüssigkeitskreislauf (1) nach Anspruch 1 **dadurch gekennzeichnet, dass** der Blasenabscheider (3) als ein Mikroblasenabscheider mit ein oder mehreren Mikroblasenentgasungselementen (25) in der Entgasungskammer (7) ausgebildet ist.

3. Flüssigkeitskreislauf (1) nach Anspruch 1 oder 2 **dadurch gekennzeichnet, dass** die Entgasungskammer (7) des Blasenabscheiders (3) sich nach oben hin verjüngt und an ihrem oberen Ende einen Zugang (15) zum Entlüftungsventil (17) aufweist.

4. Flüssigkeitskreislauf (1) nach einem der Ansprüche 1 bis 3 **dadurch gekennzeichnet, dass** das Entlüftungsventil (17) abhängig vom Füllstand der Wärmetransportflüssigkeit in der Entgasungskammer (7) automatisch öffenbar ist.

5. Flüssigkeitskreislauf (1) nach einem der Ansprüche 1 bis 4 **dadurch gekennzeichnet, dass** der Blasenabscheider (3) beim Entlüftungsventil (17) eine hygroskopische Schutzkappe (23) zum Abdichten bei Berührung mit Wasser aufweist.

6. Flüssigkeitskreislauf (1) nach einem der Ansprüche 1 bis 5 **dadurch gekennzeichnet, dass** die Entgasungskammer (7) als Wirbeltopf ausgebildet ist, in dem strömende Wärmetransportflüssigkeit als Wirbel rotierbar ist.

7. Flüssigkeitskreislauf (1) nach Anspruch 1 bis 6 **dadurch gekennzeichnet, dass** der Blasenabscheider (3) in Strömungsrichtung der Wärmetransportflüssigkeit direkt stromabwärts des zur Wärmeaufnahme der Wärmetransportflüssigkeit vorgesehenen ersten Wärmetauschers (33) angeordnet ist.

8. Flüssigkeitskreislauf (1) nach einem der Ansprüche 1 bis 7 **dadurch gekennzeichnet, dass** er als für Wasser oder ein Wasser-Glykol-Gemisch als seine Wärmetransportflüssigkeit vorgesehener Heizkreislauf mit zumindest dem zweiten Wärmetauscher (35) zum Heizen von Luft für einen oder in einem Fahrzeuginnenraum (43) ausgebildet ist.

9. Flüssigkeitskreislauf (1) nach einem der Ansprüche 1 bis 8 **dadurch gekennzeichnet, dass** der erste Wärmetauscher (33) zur Wärmeaufnahme der Wärmetransportflüssigkeit und der zweite Wärmetauscher (35) zur Wärmeabgabe aus der Wärmetransportflüssigkeit vorgesehen sind und der Blasenabscheider (3) in Strömungsrichtung der Wärmetransportflüssigkeit stromabwärts der Flüssigkeitspumpe (31) und des ersten Wärmetauschers (33) und stromaufwärts des zweiten Wärmetauschers (35) angeordnet ist.

10. Flüssigkeitskreislauf (1) nach einem der Ansprüche 1 bis 8 **dadurch gekennzeichnet, dass** der Blasenabscheider (3) in Strömungsrichtung der Wärmetransportflüssigkeit direkt stromaufwärts der Flüssigkeitspumpe (31) oder nur über eine Flüssigkeitsleitung mit der Flüssigkeitspumpe (31) verbunden stromaufwärts der Flüssigkeitspumpe (31) angeordnet ist.

11. Fahrzeug (41) **dadurch gekennzeichnet, dass** es einen Flüssigkeitskreislauf (1) nach einem der Ansprüche 1 bis 10 umfasst.

12. Fahrzeug (41) nach Anspruch 11 **dadurch gekennzeichnet, dass** es ein Kraftfahrzeug, wie insbesondere ein Omnibus, ist.

13. Fahrzeug (41) nach Anspruch 11 oder 12 **dadurch gekennzeichnet, dass** es zusätzlich zu dem Flüssigkeitskreislauf (1) einen oder mehrere weitere Flüssigkeitskreisläufe (1a) nach einem der Ansprüche 1 bis 10 sowie einen Ausgleichsbehälter (37) umfasst, der an zwei oder mehr der Flüssigkeitskreisläufe (1, 1a) jeweils saugseitig angeschlossen ist.

14. Fahrzeug (41) nach Anspruch 13 **dadurch gekennzeichnet, dass** die saugseitigen Anschlüsse der Flüssigkeitskreisläufe (1) an den Ausgleichsbehälter (37) eine gemeinsame Sammelleitung (49) zum Ausgleichsbehälter (37) umfassen.

15. Verwendung eines als Mikroblasenabscheider mit ein oder mehreren Mikroblasenentgasungselementen (25) in seiner Entgasungskammer (7) ausgebildeten Blasenabscheiders (3) mit dessen technischen Merkmalen in Anspruch 1 in einem Flüssigkeitskreislauf (1) nach einem der Ansprüche 1 bis 10 in einem Fahrzeug (41) nach einem der Ansprüche 11 bis 14.
